# EUROPEAN PATENT APPLICATION

(11) **EP 2 902 913 A1**
(43) Date of publication of application: **05.08.2015**
(21) Application number: 13841376.0
(22) Date of filing: 30.04.2013
(51) Int. Cl.: G06F 13/00, G06F 17/30

(54) **DEVICE MANAGEMENT APPARATUS AND DEVICE SEARCH METHOD**

(30) Priority: 27.09.2012 JP 2012213776
(71) Applicant: Omron Corporation, Kyoto-shi, Kyoto 600-8530 (JP)
(72) Inventor: UENOYAMA Toru, Tokyo 108-0075 (JP)
(74) Representative: Kilian Kilian & Partner
(86) International application number: PCT/JP2013/062561
(87) International publication number: WO 2014/050192

(57) **Abstract**

A device managing apparatus extracts a search condition concerning a space or a spacetime from a device search request of a user as an area condition, creates a query including the area condition, and transmits the query to a plurality of devices through a network. The respective devices determine whether target areas of their own match the area condition designated by the query. When determining that the target areas mach the area condition, the devices return responses to the query to the device managing apparatus. The device managing apparatus creates a device search result for the device search request on the basis of the responses sent from the devices and presents the device search result to the user.

## Description

### Technical Field

The present invention relates to a technique for making it possible to easily find a device matching a purpose from among a large number of devices present in various places.

### Background Art

As one means for realizing the ubiquitous society, a sensor network attracts attention. The sensor network is a technique for setting sensor devices, which have a detection function and a communication function, in various places and networking the sensor devices to enable collection, management, and seamless use of sensing data (see Japanese Patent Application Laid-open No. 2005-260697). If the sensor network is realized, it is easy to quickly and accurately grasp situations in all places from anywhere. Therefore, it is expected that the sensor network is not only applied to industrial fields such as manufacturing sites and physical distribution but also extensively applied to social systems such as transportation and various infrastructures and fields related to life such as medical and educational fields.

Incidentally, in the sensor network, there is an advantage that detection performance (resolution, types of detectable information, etc.) of an entire system increases as the number of sensors increases. On the other hand, if there are too many choices, it is difficult to find a sensor optimum for obtaining target information. Harmful effects such as deterioration in convenience for users and an increase in a load on a server occur. In order to solve such a problem in the system disclosed in Japanese Patent Application Laid-open No. 2005-0260697, a network of a tree structure is used in which, under a host sensor having a wide detection area, a subordinate sensor group having a narrow detection area included in the detection area of the host sensor are suspended. This makes it possible to efficiently access a target sensor by tracing the hierarchical structure of the network in order.

### Citation List

### Patent Literature

Patent Literature 1: Japanese Patent Application Laid-open No. 2005-260697

### Summary of Invention

### Technical Problem

As a method of extracting a desired sensor out of a sensor group configuring a sensor network, conventionally, in general, a server centrally manages position information, types, and the like of sensors in a database and searches through the database using a request of a user as a search key. The system disclosed in Japanese Patent Application Laid-open No. 2005-0260697 is characteristic in associating the hierarchical structure of the network and the positions of the sensors to simplify a search. However, the system is the same as the conventional system in centrally managing the position information of the sensors in the server.

Such a conventional system has problems explained below. Whereas a request of a user, who uses the sensor network, is usually designated as a target area (space) of sensing in such a manner as "I would like to know a congestion situation of Platform 0 of Kyoto station", in most cases, setting places of the sensors are managed by the database. However, the setting places of the sensors and sensing areas of the sensors do not always coincide with each other. That is, even if there is a monitoring camera set in the "Platform 0 of Kyoto station", the camera might be photographing arrivals and departures of trains, a platforms on the opposite side, situations of ticket gates rather than Platform 0. Therefore, in the case of the conventional system, after once searching for a sensor set in the vicinity of an area desired to be sensed, a user himself or herself needs to check parameters such as setting directions and ranges of the sensors and screen out the sensors.

Naturally, a system configuration is also theoretically possible in which accurate sensing areas of sensors are registered in a database in advance and a server side determines matching of a user request and the sensing areas of the sensors. However, it is unrealistic from the viewpoint of a processing load to manage, in the server, sensing areas of all sensors configuring a sensor network and perform calculation in overconcentration. There is also a sensor, a sensing area of which changes every moment, such as a monitoring camera having a PTZ (pan/tilt/zoom) function or a mobile (portable) sensor. However, in the configuration in which the server performs the central management, it is difficult to cope with such a change in the sensing area on a real time basis.

Note that the sensors are explained as examples above. However, in the case of a network by a device such as an actuator (or a controller), completely the same problems could occur. This is because, although there is a difference of "detecting (acquiring) a state" or "changing a state", the "sensor" and the "actuator" are common in having a causal relation with a target area in a predetermined range and in that a setting place and a target area of the device do not always coincide with each other.

The present invention has been devised in view of the circumstances and it is an object of the present invention to provide a technique for making it possible to accurately and quickly find a device matching a request of a user out of a large number of device present in various places.

### Solution to Problem

In order to attain the object, the present invention (a characteristic operation principle on which claims recited in the scope of patent claims are based) adopts a configuration in which a query including an area condition based on a user request is sent to devices, determination concerning matching or mismatching with the area condition is performed on the device side, and responses from the devices are aggregated to create a search result. Since the configuration for causing the devices to perform the determination concerning matching or mismatching with the area condition is adopted, it is possible to accurately and quickly find a device matching a request of a user out of a large number of devices.

A device managing apparatus according to claim 1 is a device managing apparatus configured to be capable of communicating with a plurality of devices through a network. Each of the plurality of devices is a device having a causal relation with a target area specified by a space or a spacetime. The device managing apparatus includes: a search request acquiring unit that acquires a device search request from a user; a query creating unit that extracts a search condition concerning the space or the spacetime from the acquired device search request as an area condition and creates a query for extracting a device having a target area matching the area condition from among the plurality of devices; a query transmitting unit that transmits the created query to the plurality of devices through a network in order to cause the devices to determine whether target areas of their own match the area condition; and a search result creating unit that creates a device search result for the device search request on the basis of a response sent from the device matching the area condition included in the query.

The "space" is an area specified by two dimensions (x, y) or three dimensions (x, y, z). The "spacetime" means an area obtained by adding a dimension of "time (t)" to the "space", that is, an area specified by the three dimensions (x, y; t) or four dimensions (x, y, z; t). The "device" is a device having a causal relation with the target area specified by the space or the spacetime. For example, a sensor and an actuator (including a form incorporating a controller that receives information from the sensor and controls the operation of the actuator) correspond to the device. Further, there is also a device capable of operating as both of the sensor and the actuator (example: bidirectional conversion between mechanical vibration and electrical vibration by a piezoelectric element). The sensor is a device that detects (acquires) a state of the target area. In the case of the sensor, there is a causal relation between a state of the target area ("cause") and information detected (acquired) by the sensor ("result"). The actuator is a device that changes the state of the target area. In the case of the actuator, there is a causal relation between the action and the operation of the actuator ("cause") and a state change of the target area ("result"). For example, an image sensor, a temperature sensor, a humidity sensor, an illuminance sensor, a force sensor, a sound sensor, an RFID sensor, an infrared sensor, an attitude sensor, a rainfall sensor, a radiation sensor, and a gas sensor correspond to the sensor. Various devices, for example, a motor, a solenoid, a controller, a robot, a light, a speaker, a display, a digital signage, and an air conditioner correspond to the actuator. There are also devices including both of the sensor (an image sensor, etc.) and an actuator (a display, a speaker, etc.) such as a cellular phone, a smartphone, and a slate device. It is possible to mix various kinds of devices in the "plurality of devices" managed by the device managing apparatus.

With the configuration of the device managing apparatus according to claim 1, since the "target area" of the device and the "area condition" based on the request of the user are compared, it is possible to accurately extract a device having a causal relation with a space or a spacetime intended by the user. Since the device managing apparatus causes the devices to perform the determination processing (distributed processing), it is possible to markedly reduce a processing load compared with the concentrated processing performed on the device managing apparatus side. Since the device itself performs the determination processing, even when a target area changes every moment as in a mobile device, it is possible to obtain a determination result based on an actual target area at a point in time of the change.

In the device managing apparatus according to claim 2, the search result creating unit presents the created device search result to the user who has performed the device search request. With the configuration of the device managing apparatus according to claim 2, it is possible to easily realize provision of information concerning a device matching the area condition requested by the user to the user.

The device managing apparatus according to claim 3 further includes a rough search unit that extracts, from among the plurality of devices, a plurality of candidate devices that are likely to satisfy the device search request. The query transmitting unit sets, as transmission destinations of the query, the plurality of candidate devices extracted by the rough search unit. With the configuration of the device managing apparatus according to claim 3, it is possible to reduce a load on the network and processing loads on the device managing apparatus and the devices by narrowing down transmission destinations of the query through a rough search.

In the device managing apparatus according to claim 4, the rough search unit selects, with reference to an index mapping each of a plurality of area blocks formed by dividing the entire space or spacetime into a plurality of areas to one or more devices that are likely to have target areas of their own overlapping the area block, an area block matching the area condition extracted from the device search request from among the plurality of area blocks and sets, as the candidate device, a device associated with the selected area block in the index. With the configuration of the device managing apparatus according to claim 4, it is possible to perform processing for selecting a candidate device (a query transmission destination) from a given area condition at extremely high speed by referring to the index.

It is also assumed that the plurality of devices include a query-compliant device having a determination function of determining whether a target area of its own matches an area condition included in a query, and returning a response and a query-noncompliant device not having the determination function. The device managing apparatus according to claim 5 performs, in the case of the query-noncompliant device, instead of transmitting a query to the device, processing for determining, on the basis of information acquired from a storing unit that stores information representing a target area of the query-noncompliant device, whether the target area of the device matches the area condition. With the configuration of the device managing apparatus according to claim 5, it is possible to include the query-noncompliant device in a search target as well.

A device according to claim 6 is a device having a causal relation with a target area specified by a space or a spacetime. The device includes: a receiving unit that receives, through a network, a query including an area condition, which is a condition concerning the space or the spacetime; a determining unit that compares an area condition included in the received query and a target area of the device thereby determining whether the target area of the device matches the area condition; and a transmitting unit that transmits, when determination is made by the determining unit that the target area of the device matches the area condition, a response to the query to the device managing apparatus through the network.

A device searching method according to claim 7 is a device searching method for finding a device that satisfies a request condition from among a plurality of devices. Each of the plurality of devices is a device having a causal relation with a target area specified by a space or a spacetime. The device searching method includes: a step in which a computer acquires a device search request from a user; a step in which the computer extracts a search condition concerning the space or the spacetime from the acquired device search request as an area condition and creates a query for extracting a device having a target area matching the area condition from among the plurality of devices; a step in which the computer transmits the created query to the plurality of devices through a network in order to cause the devices to determine whether target areas of their own match the area condition; and a step in which the computer creates a device search result for the device search request on the basis of a response sent from the device matching the area condition included in the query.

With the device searching method according to claim 7, since the "target area" of the device and the "area condition" based on the request of the user are compared, it is possible to accurately extract a device having a causal relation with a space or a spacetime intended by the user. Since the computer causes the devices to perform the determination processing (distributed processing), it is possible to markedly reduce a processing load compared with the concentrated processing performed on the computer side. Since the device itself performs the determination processing, even when a target area changes every moment as in a mobile device, it is possible to obtain a determination result based on an actual target area at a point in time of the change.

Aprogramaccording to claim 8 is a program for causing a computer to execute the steps of the device searching method according to claim 7.

With the program according to claim 8, since the "target area" of the device and the "area condition" based on the request of the user are compared, it is possible to accurately extract a device having a causal relation with a space or a spacetime intended by the user. Since the computer causes the devices to perform the determination processing (distributed processing), it is possible to markedly reduce a processing load compared with the concentrated processing performed on the computer side. Since the device itself performs the determination processing, even when a target area changes every moment as in a mobile device, it is possible to obtain a determination result based on an actual target area at a point in time of the change.

### Advantageous Effects of Invention

According to the present invention, it is possible to accurately and quickly find a device matching a request of a user out of a large number of devices.

### Brief Description of Drawings

[Fig. 1] Fig. 1 is a diagram showing the configuration of a device network system.
[Fig. 2] Fig. 2 is a diagram showing an example of use of device search processing.
[Fig. 3] Fig. 3 is a diagram showing another example of use of the device search processing.
[Fig. 4] Fig. 4 is a flowchart showing an overall flow of device search processing.
[Fig. 5] Fig. 5 is a flowchart showing a processing flow of rough search.
[Fig. 6] Fig. 6 is a diagram schematically showing an inverted index used in the rough search.
[Fig. 7] Fig. 7 is a flowchart showing a processing flow of a detailed search.

### Description of Embodiments

### <System configuration>

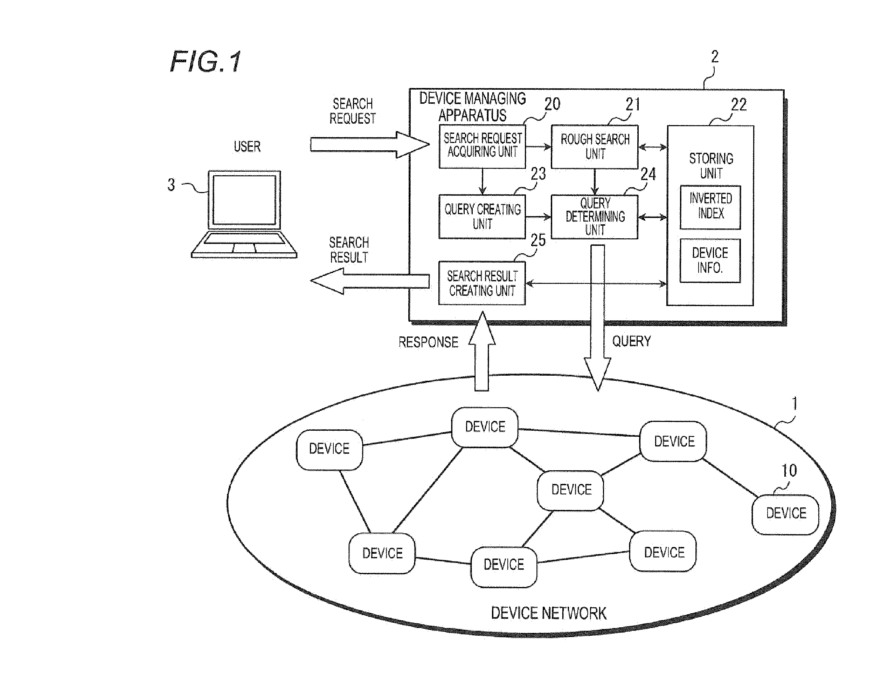

A configuration example of a device network system according to an embodiment of the present invention is explained with reference to Fig. 1.

The device network system is configured from a device network 1 and a device managing apparatus 2. The device network 1 is a network configured by a large number of devices 10 present in various places. A configuration, a communication system, and the like of the network can be arbitrarily designed and are not particularly limited. The respective devices 10 are capable of communicating with the device managing apparatus 2 via a wide area network such as the Internet. The device managing apparatus 2 is a server apparatus that manages information concerning the devices 10 configuring the device network 1 and information and the like collected from the devices and provides various services (a device search is one of the services) for a user who desires to use the device 10. The user can access the services provided by the device managing apparatus 2 from a user terminal 3 through the wide area network such as the Internet.

The respective devices 10 are devices having a causal relation with a target area specified by a space or a spacetime and can be roughly divided into a "sensor" and an "actuator". The "space" is an area specified by two dimensions (x, y) or three dimensions (x, y, z). The "spacetime" means an area obtained by adding a dimension of "time (t)" to the "space", that is, an area specified by the three dimensions (x, y; t) or four dimensions (x, y, z; t). For example, an image sensor, a temperature sensor, a humidity sensor, an illuminance sensor, a force sensor, a sound sensor, an RFID sensor, an infrared sensor, an attitude sensor, a rainfall sensor, a radiation sensor, and a gas sensor correspond to the sensor. In this system, any kinds of sensors can be used. For example, a motor, a solenoid, a controller, a robot, a light, a speaker, a display, a digital signage, and an air conditioner correspond to the actuator. In this system, any kinds of actuators can be used. There are also devices including both of the sensor (an image sensor, etc.) and an actuator (a display, a speaker, etc.) such as a cellular phone, a smartphone, and a slate device. It is possible to mix various kinds of devices in the device network 1.

The device managing apparatus 2 has a function of a search request acquiring unit 20, a rough search unit 21, a storing unit 22, a query creating unit 23, a query determining unit 24, a search result creating unit 25, and the like. In terms of hardware, the device managing apparatus 2 can be configured by a computer including a CPU, a main storage device (a memory), an auxiliary storage device (a HDD, a SSD, etc.), a communication device, an input device, and a display device. Functional blocks shown in Fig. 1 are embodied by loading a computer program stored in the auxiliary storage device to the main storage device and the CPU executing the program. Note that the device managing apparatus 2 may be configured by a single computer or can be configured by a plurality of computers that cooperate with one another.

As the user terminal 3, for example, a personal computer, a cellular phone, a smartphone, and a slate device can be used. Note that, in this embodiment, an example is explained in which the user performs a device search through the Internet. However, it is also possible to adopt a configuration in which the user operates the device managing apparatus itself or a part or all of functions of the device managing apparatus are implemented on the user terminal 3 side.

### <Device search service>

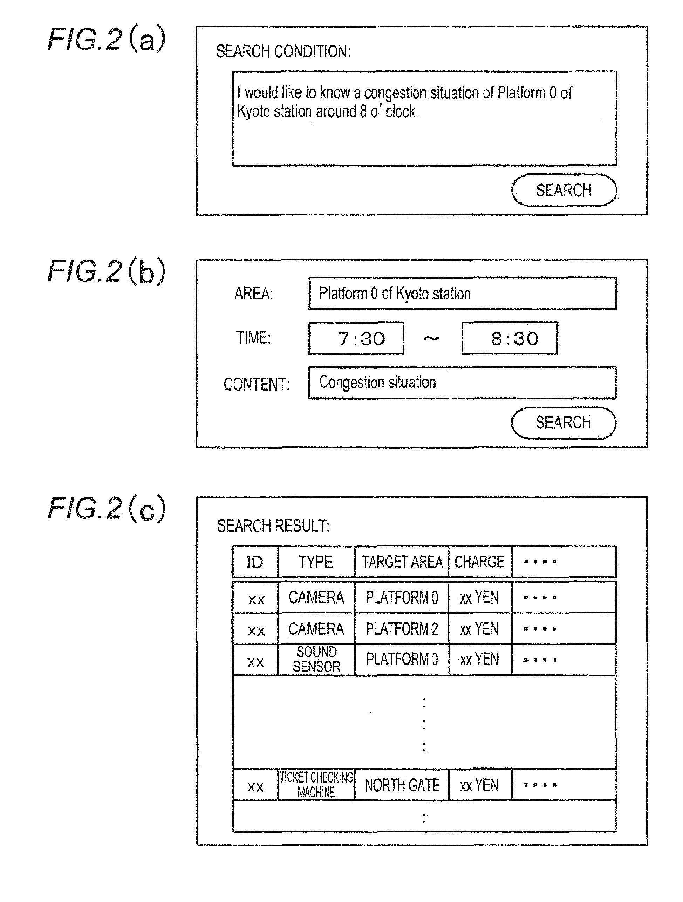

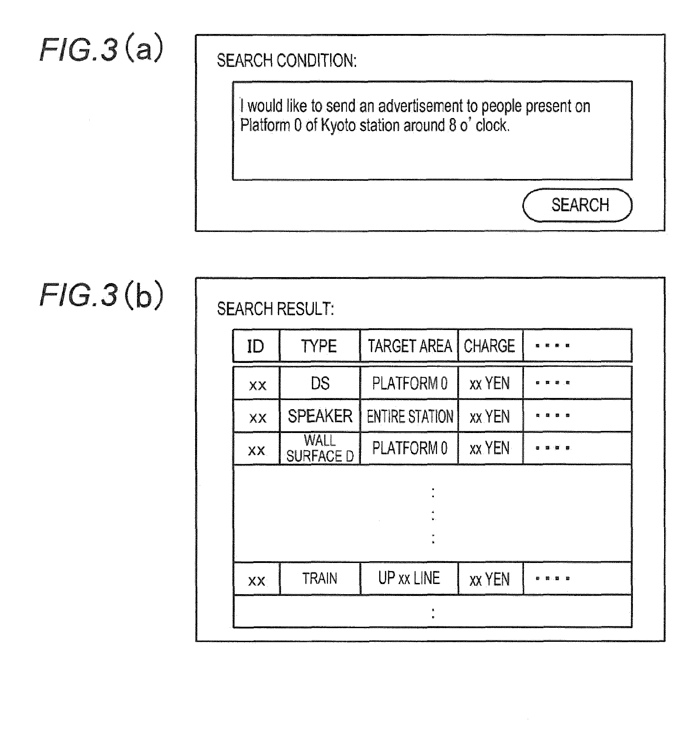

A device search service provided by the device managing apparatus 2 is explained in detail below. The device search service is a service for facilitating the user to find a device optimum for attaining a purpose out of a large number of devices 10 configuring the device network 1. First, specific examples of use of the search service are explained with reference to Fig. 2 and Fig. 3.

When the user accesses the device search service using the user terminal 3, a search condition input screen shown in Fig. 2 (a) is displayed. On this screen, a search condition (a purpose of a search) can be input as a free sentence such as "I would like to know a congestion situation of Platform 0 of Kyoto station around 8 o'clock". Fig. 2(b) is another example of the search condition input screen. In the case of this screen, an area, time, and content are input to separate boxes. When a search button is pressed, a search request is transmitted from the user terminal 3 to the device managing apparatus 2. Device search processing is executed in the device managing apparatus 2. Details of the device search processing are explained below.

Fig. 2(c) is an example of a search result screen returned from the device managing apparatus 2. As means for grasping a congestion situation of a platform, for example, a video of an image sensor (a camera), a level of congestion sound, and an entrance record of an automatic ticket checking machine are assumed. As the image sensor, there is an image sensor set in Platform 0 and an image sensor that photographs Platform 0 from a platform on the opposite side or another place. In the device search service, all devices likely to satisfy a search condition input by the user are retrieved. The devices are displayed as a list in order from a device having the highest coincidence with the search condition. In the device list, information such as specifications of the devices, a condition of use, a usage charge, a provider of the devices (these are collectively referred to as "device information") are also displayed according to necessity. The user can select a device while viewing the devices presented as a search result, comparing the devices, and examining which of the devices the user uses.

Fig. 3 shows another example of use. On a search condition input screen shown in Fig. 3(a), a condition (a purpose) "I would like to send an advertisement to people present on Platform 0 of Kyoto station around 8 o'clock" is input. As means for communicating information to people present on a platform, for example, a digital signage (DS) set in the platform and a speaker for announcement are assumed. An object not set (fixed) on the platform such as a large display set on a wall surface of a building in the neighborhood, the outer surface of a train entering Platform 0, a smartphone carried by a person present on the platform, or an airship can be an advertisement transmission medium. In a device list shown in Fig. 3(b), these usable devices are displayed as a list.

As it is seen from the examples shown in Fig. 2 and Fig. 3, irrespective of whether the device 10 is a sensor or an actuator, a setting position (a position of presence) of the device 10 and an area with which the device 10 has a causal relation do not always coincide with each other. Therefore, the device search service of this system enables a search for a device through comparison of an area condition input by the user and a target area with which the device has a causal relation. Consequently, it is possible to accurately extract a device matching a purpose and a desire of the user. Moreover, since purpose attaining means not assumed by the user is also listed (recommended), it is possible to expect an increase in opportunities of use by the user.

### (Overall flow of the device search processing)

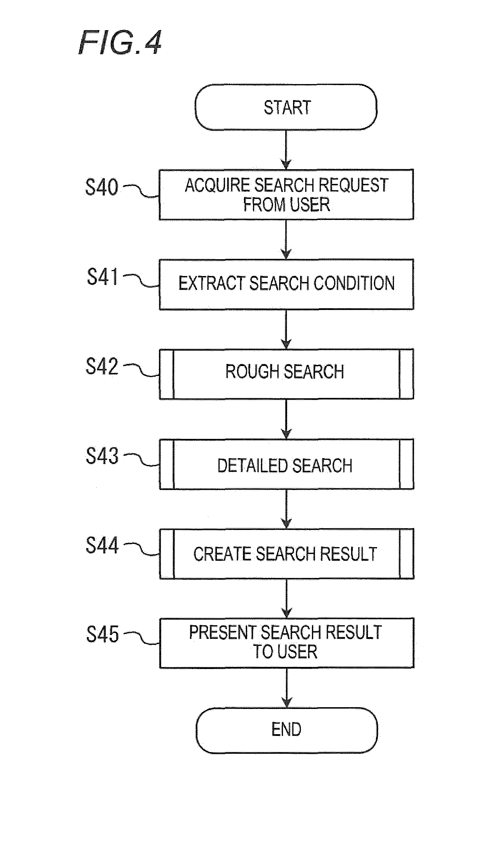

Subsequently, the device search processing by the device managing apparatus 2 is explained with reference to Fig. 4.

First, the search request acquiring unit 20 acquires a search request from the user terminal 3 (stepS40) and extracts, as an area condition, a search condition concerning a space or a spacetime out of the search request (step S41). Forexample, when a search request "I would like to know a congestion situation of Platform 0 of Kyoto station around 8 o'clock" is obtained as shown in Fig. 2(a), the search request acquiring unit 20 performs a morphological analysis or a semantic analysis to extract a condition "(Platform 0 of Kyoto station) and (around 8 o'clock)" out of this text. The extracted area condition is passed to the rough search unit 21 and the query creating unit 23.

Subsequently, the rough search unit 21 refers to an inverted index stored in the storing unit 22 to extract candidates (referred to as "candidate devices") of the device 10 likely to satisfy the area condition (step S42). A purpose of a rough search is to reduce a processing load of a detailed search at a later stage. Therefore, the rough search may be omitted when the processing load of the detailed search is not a problem, for example, when the number of the devices 10 configuring the device network 1 is small or when a processing ability of the device 10 and a band of the network have margins.

Subsequently, in the detailed search in step S43, the query creating unit 23 creates a query including the area condition extracted in step S41. The query determining unit 24 transmits the query to the candidate devices 10 extracted in the rough search. The query is a processing request for an information search (information retrieval) used in a computer program and the like. The query is data in which, for example, a search range and a search condition are described. A query for extracting a device having a target area matching the area condition extracted in step S41 out of the plurality of devices 10 configuring the device network 1 is created. The respective devices 10, which receive the query, determine whether target areas of their own match the area condition of the query and return results of the determination to the device managing apparatus 2.

The search result creating unit 25 aggregates the responses from the devices 10 and creates a device list (step S44). The device list is transmitted from the search result creating unit 25 to the user terminal 2 and presented to the user as a search result (step S45). In this way, the device search processing is completed.

### (Rough search)

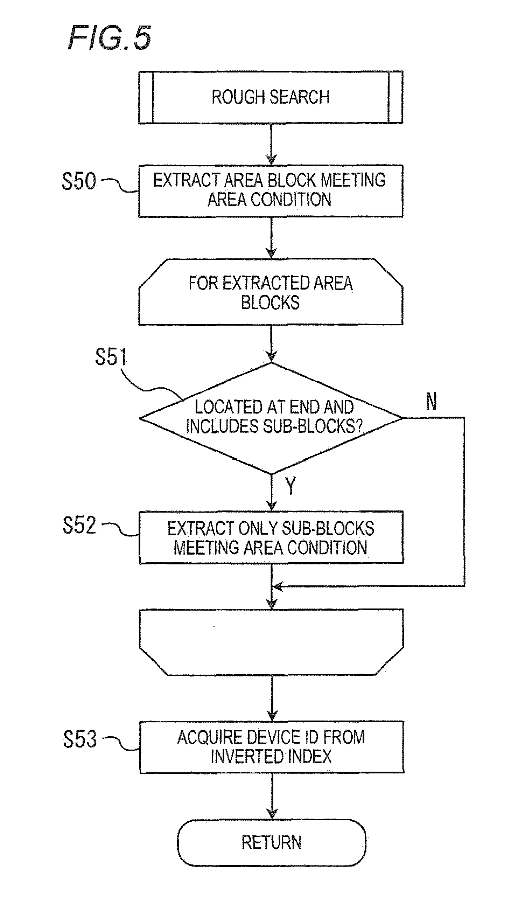

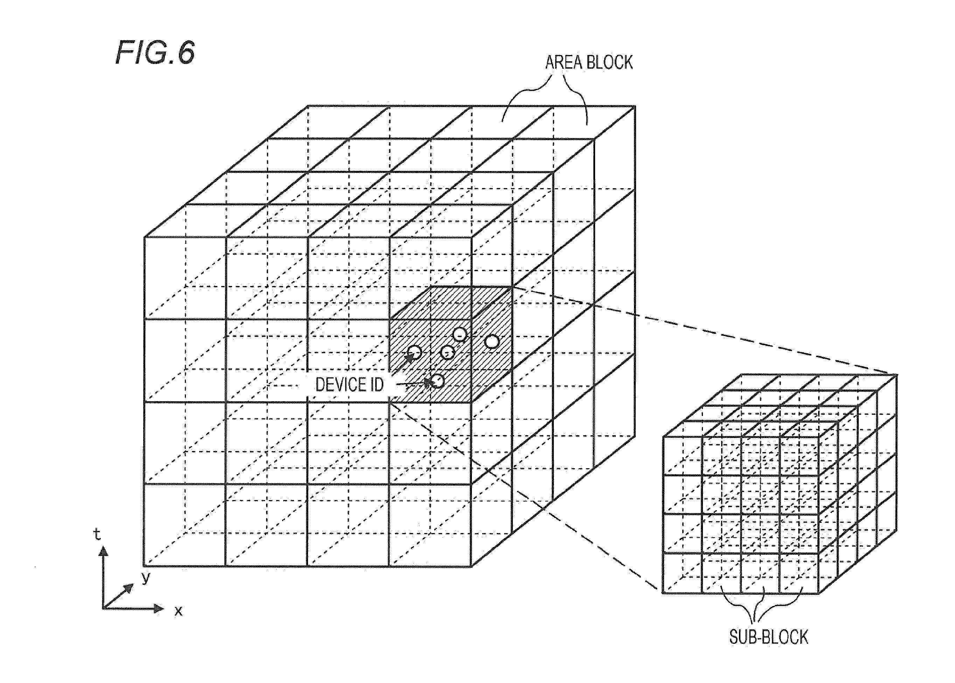

Details of the rough search (step S42) are explained with reference to Fig. 5 and Fig. 6. Fig. 5 is a flowchart showing a processing flow of the rough search. Fig. 6 is a diagram schematically showing the inverted index used in the rough search.

The transposition index is data (a table) that maps each of a plurality of area blocks formed by dividing an entire space or spacetime into a plurality of areas to one or more devices likely to have target areas of their own overlapping the area block. In the conventional system, in general, information such as a setting place of a device is acquired using a device ID as a key. On the other hand, in the rough search, a reverse lookup search, that is, processing for acquiring a device ID using an area condition as a key is performed. In order to quickly and easily perform the processing, in the device searching apparatus 2, the inverted index shown in Fig. 6 is prepared in advance.

Fig. 6 is an example of a three-dimensional spacetime consisting of space axes x and y and a time axis t. The three-dimensional spacetime is divided into a plurality of rectangular parallelepipeds. Device IDs are associated with respective area blocks. The device IDs may be redundantly allocated. That is, for example, when a target area of a device extends across a plurality of area blocks or when a target area could change as in a device of a mobile type and a portable type, an ID of the device is associated with all areas that the target area could overlap. Since the inverted index is referred to in the rough search, it is preferable that redundancy is high rather than accuracy (stringency).

An area block including a large number of device IDs is subdivided into sub-blocks as shown in Fig. 6. For example, in a place where setting density of sensors or actuators is high such as the periphery of a station or a downtown, an area block is subdivided. In a suburb or the like, an area block is increased in size. Consequently, it is possible to improve efficiency of the rough search. The same effect can be obtained by varying the size of blocks such that the number of device IDs to be registered is substantially equal rather than equalizing the size of the blocks.

The device managing apparatus 2 automatically generates the inverted index from device information (meta information) stored in the storing unit 22 or collected from the devices 10. As generation or update of the inverted index, batch processing may be carried out at night or the like. Alternatively, the generation or update of the inverted index may be carried out at timing of addition, change, or the like of a device. In the case of the device of the mobile type or the portable type, position information may be periodically collected from the device to perform update of the inverted index substantially on a real time basis. Alternatively, it is also preferable to statistically predict an area in future on the basis of a history of movement and automatically register an ID in a pertinent area block.

Note that, as the ID registered in the inverted index, besides peculiar IDs allocated to the respective devices, an ID indicating a device set consisting of a plurality of devices or only an ID of a representative device among a plurality of device can also be registered. When the device network 1 is divided into a plurality of segments and gateways are set in the segments, it is also possible to adopt a configuration in which IDs of the gateways are registered. In Fig. 6, the three-dimensional spacetime of x, y, and t is illustrated. However, the same processing is possible in a multidimensional space or a spacetime including at least one space axis. It is also preferable to add, besides the space axis and the time axis, axes concerning attributes of the devices such as a detection frequency and resolution of a sensor and a type of an object.

As shown in Fig. 5, the rough search unit 21 extracts, on the basis of the inverted index, one or more area blocks meeting the area condition acquired from the search request acquiring unit 20 (step S50). Subsequently, the rough search unit 21 checks whether an area block located at an end among the extracted area blocks (i.e., an area block including a boundary of the space or the spacetime specified in the area condition) is an area block subdivided into sub-blocks (step S51). When there are sub-blocks, the rough search unit 21 determines again whether the sub-blocks meet the area condition in sub-block units (step S52). By performing detailed area determination only in the boundary portion of the area, it is possible to improve efficiency of the rough search.

When the area blocks (or the sub-blocks) determined as meeting the area condition are obtained through the processing explained above, the rough search unit 21 refers to the inverted index, acquires device IDs corresponding to the area blocks (or the sub-blocks), passes a list of the IDs (a list of candidate devices) to the query determining unit 24, and ends the processing (step S53).

### (Detailed search)

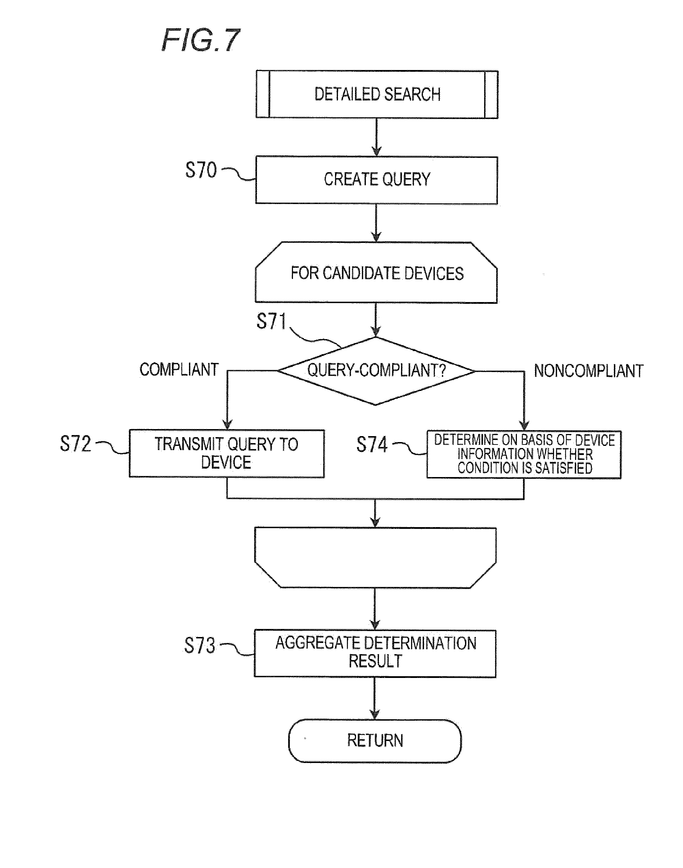

Details of the detailed search (step S43) are explained with reference to Fig. 7. Fig. 7 is a flowchart showing a processing flow of the detailed search.

In step S70, the query creating unit 23 creates a query including the area condition obtained in step S41. In this case, conditions (e.g., a usage charge, a detection frequency, and a type of a device) other than the area condition can be included in the query.

Subsequently, the query determining unit 24 determines whether each of the candidate devices obtained in the rough search satisfies the query condition. In this case, the processing is varied according to whether the candidate device is a query-compliant device or a query-noncompliant device (step S71). The query-compliant device means a device including a determination function for determining whether a target area of the device matches an area condition included in the query and returning a response. The query-noncompliant device is a device not including such a determination function. It is possible to determine whether a device is query-compliant or noncompliant referring to the device information stored in the storing unit 22.

In the case of the query compliant device, the query determining unit 24 transmits a query to the device (step S72) . The device itself determines on the basis of the received query whether the own device meets respective conditions included in the query. When the device satisfies all the conditions, the device returns a "match" response to the device managing apparatus 2. When the device satisfies only a part of the conditions, the device returns a "partial match" response to the device managing apparatus 2. However, when the device does not satisfy at least one of unavoidable conditions (conditions designated as essential conditions by the user, conditions essential for attaining a purpose of the user, etc.) or when the device satisfies no conditions, the device does not return a response. It is also possible to adopt a configuration in which the device returns a "mismatch" response. However, it is preferable not to generate an unnecessary response from the viewpoint of a reduction of a load on the network. Responses received from the devices 10 are aggregated in the search result creating unit 25 (step S73).

As a method of sending a query, various methods are conceivable according to forms of the device network 1. For example, in a basic configuration, an address of a transmission destination device is set in a destination of a query packet to transmit the query packet. This method can be applied to any network as long as packet transfer is performed through the network on the basis of a peculiar address. A method of sending packets individually to candidate devices or a method of designating a plurality of destinations as a destination of one packet may be adopted. If multicast like the latter method is possible, there is an advantage that it is possible to attain a reduction in a network load. A special query packet transferred to all devices included in a specific area or all devices of a specific type may be used. When an ID indicating a set of device groups, an ID of a representative device, a gateway ID of a segment, and the like are registered in the inverted index as explained above, it is also preferable to set the IDs as destinations. When closeness of devices in a real space and closeness of devices in a device network correspond to each other, it is also preferable to transfer, according to multi-hop, a query packet to a device present close to the device managing apparatus 2. In this case, to limit a search time or prevent an infinite loop being formed in a simple mesh network, it is desirable to designate, in the query, upper limits of the number of times of transfer and a transfer time of the query.

On the other hand, in the case of the query-noncompliant device, the query determining unit 24 refers to the device information stored in the storing unit 22 and determines whether a target area of this candidate device and an area condition of a query are "match", "partially match", or other than "match" or "partial match" (step S74). When a large number of query-noncompliant devices are present, it is desirable to execute determination for the devices in parallel according to distributed processing. Determination results of query-noncompliant devices are also aggregated in the search result creating unit 25 (step S73).

### (Search result creation)

The search result creating unit 25 adds, on the basis of a result of the detailed search, a device determined as "match" to the device list. Concerning a device determined as "partial match", the search result creating unit 25 determines whether the device can satisfy all the query conditions by being combined with other "partial match" devices. When the device can satisfy the conditions by being combined with a plurality of devices, the search result creating unit 25 adds the plurality of devices to the device list as one set. For example, when there is a device that can cover only the right half of an area designated by the user as a condition, if there is a device that can cover the remaining left half, the search result creating unit 25 inserts a pair of the devices in the device list. When all the conditions cannot be satisfied irrespective of how the device is combined, it is desirable to add the device to the device list together with coincidence or exclude the device from the device list. A search result obtained by the processing explained above is the search result shown in Fig. 2(c) and Fig. 3(b).

### <Advantages of this embodiment>

With the configuration of this embodiment explained above, since the "target area" of the device 10 and the "area condition" based on the request of the user are compared, it is possible to accurately extract the device 10 having a causal relation with a space or a spacetime intended by the user. Since the device managing apparatus 2 causes the devices 10 to perform the determination processing, it is possible to markedly reduce a processing load compared with the over-concentrated processing performed on the device managing apparatus 2 side. Since the device itself performs the determination processing, even when a target area changes every moment as in the device of the mobile type or the portable type, it is possible to obtain a determination result based on an actual target area at a point in time of the change. In this embodiment, since transmission destinations of a query are narrowed down by the rough search, it is possible reduce a load on the network and processing loads of the device managing apparatus 2 and the device 10. Further, since the query determination can also be performed on the device managing apparatus 2 side as well, it is possible to include a query-noncompliant device in the search target as well.

Note that the embodiment explained above indicates a specific example of the present invention and does not mean to limit the scope of the present invention to the specific example. For example, when all the devices configuring the device network are query-compliant, the processing concerning query-noncompliance is unnecessary. When the devices can be narrowed down to a number of a certain degree in the rough search, the detailed search can be omitted.

### Reference Signs List

1: Device network
2: Device managing apparatus
3: User terminal
10: Device
20: Search request acquiring unit
21: Rough search unit
22: Storing unit
23: Query creating unit
24: Query transmitting unit
25: Search result creating unit

## Claims

1. A device managing apparatus configured to be capable of communicating with a plurality of devices through a network, each of the plurality of devices being a device having a causal relation with a target area specified by a space or a spacetime,
the device managing apparatus comprising:
a search request acquiring unit that acquires a device search request from a user;
a query creating unit that extracts a search condition concerning the space or the spacetime from the acquired device search request as an area condition and creates a query for extracting a device having a target area matching the area condition from among the plurality of devices;
a query transmitting unit that transmits the created query to the plurality of devices through a network in order to cause the devices to determine whether target areas of their own match the area condition; and
a search result creating unit that creates a device search result for the device search request on the basis of a response sent from the device matching the area condition included in the query.

2. The device managing apparatus according to claim 1, wherein the search result creating unit presents the created device search result to the user who has performed the device search request.

3. The device managing apparatus according to claim 1 or 2, further comprising a rough search unit that extracts, from among the plurality of devices, a plurality of candidate devices that are likely to satisfy the device search request, wherein
the query transmitting unit sets, as transmission destinations of the query, the plurality of candidate devices extracted by the rough search unit.

4. The device managing apparatus according to claim 3, wherein the rough search unit selects, with reference to an indexmapping each of a plurality of area blocks formed by dividing the entire space or spacetime into a plurality of areas to one or more devices that are likely to have target areas of their own overlapping the area block, an area block matching the area condition extracted from the device search request from among the plurality of area blocks, and
sets, as the candidate device, a device associated with the selected area block in the index.

5. The device managing apparatus according to any one of claims 1 to 4, wherein
the plurality of devices include a query-compliant device having a determination function of determining whether a target area of its own matches an area condition included in a query and returning a response, and a query-noncompliant device not having the determination function, and
the device managing apparatus performs, in the case of the query-noncompliant device, instead of transmitting a query to the device, processing for determining, on the basis of information acquired from a storing unit that stores information representing a target area of the query-noncompliant device, whether the target area of the device matches the area condition.

6. A device having a causal relation with a target area specified by a space or a spacetime,
the device comprising:
a receiving unit that receives, through a network, a query including an area condition, which is a condition concerning the space or the spacetime;
a determining unit that compares an area condition included in the received query and a target area of the device thereby determining whether the target area of the device matches the area condition; and
a transmitting unit that transmits, when determination is made by the determining unit that the target area of its own matches the area condition, a response to the query to the device managing apparatus through the network.

7. A device searching method for finding a device that satisfies a request condition from among a plurality of devices, each of the plurality of devices being a device having a causal relation with a target area specified by a space or a spacetime,
the device searching method comprising:
a step in which a computer acquires a device search request from a user;
a step in which the computer extracts a search condition concerning the space or the spacetime from the acquired device search request as an area condition and creates a query for extracting a device having a target area matching the area condition from among the plurality of devices;
a step in which the computer transmits the created query to the plurality of devices through a network in order to cause the devices to determine whether target areas of their own match the area condition; and
a step in which the computer creates a device search result for the device search request on the basis of a response sent from the device matching the area condition included in the query.

8. A program for causing a computer to execute the steps of the device searching method according to claim 7.
